# EUROPÄISCHE PATENTSCHRIFT

(11) **EP 0 397 818 B1**
(45) Veröffentlichungstag und Bekanntmachung des Hinweises auf die Patenterteilung: **04.08.1993**
(21) Anmeldenummer: 89911758.4
(22) Anmeldetag: 30.10.1989
(51) Int. Cl.: H02P 7/628

(54) **VERFAHREN UND EINRICHTUNG ZUR ÄNDERUNG DER IST-DREHZAHL EINES MEHRPHASEN-ASYNCHRONMOTORS, UND ZUR AUSFÜHRUNG DES VERFAHRENS GEEIGNETES MOTORENSYSTEM**
A PROCESS AND DEVICE FOR CHANGING THE ACTUAL ROTATION SPEED OF A MULTI-PHASE NON-SYNCHRONOUS MOTOR AND A SUITABLE MOTOR SYSTEM FOR APPLYING THE PROCESS
PROCEDE ET DISPOSITIF POUR MODIFIER LA VALEUR EFFECTIVE DE LA VITESSE DE ROTATION D'UN MOTEUR ASYNCHRONE POLYPHASE ET SYSTEME DE MOTEURS CONVENANT POUR LA MISE EN UVRE DE CE PROCEDE

(30) Priorität: 04.11.1988 CH 4096/88; 22.02.1989 CH 725/89
(43) Veröffentlichungstag der Anmeldung: 22.11.1990
(73) Patentinhaber: EUROPE PATENT LTD, Dublin 4 (IE)
(72) Erfinder: VOET, Eduard, Josef, CH-6503 Carasso (CH)
(74) Vertreter: EGLI-EUROPEAN PATENT ATTORNEYS
(86) Internationale Anmeldenummer: CH8900188
(87) Internationale Veröffentlichungsnummer: WO9005407

(56) Entgegenhaltungen:
- DE-A- 3 737 633
- PATENT ABSTRACTS OF JAPAN vol. 11, No: 182 (E 515)(2629) 11June 1987 & JP-A-62012382
- PATENT ABSTRACTS OF JAPAN vol. 6, No: 211 (E- 137) (1089) 23 Okt 1982 & JP-A- 57116595

## Beschreibung

Die Erfindung betrifft ein Verfahren zur Aenderung der Ist-Drehzahl eines Mehrphasen-Asynchronmotors bis zur Erreichung einer Soll-Drehzahl, wobei der mehrphasige Ständerstrom des Motors eine variable Frequenz aufweist und sein Effektivwert in Abhängigkeit von einer Stromführungsgrösse bestimmt wird, sowie eine Einrichtung zur Ausführung des Verfahrens und ein zur Ausführung des Verfahrens geeignetes Motorensystem.

Die Steuerung der Drehzahl und des Drehmoments eines Mehrphasen-Asynchronmotors ist an sich wohlbekannt und kann beispielsweise mittels eines Wechselrichters erfolgen.

Beispielsweise ist aus DE-3737633 bekannt, den Ständerstrom des Motors mit einer Stromführungsgrösse zu vergleichen, um daraus den vom Wechselrichter dem Motor zu liefernden Ständerstrom und dessen Frequenz abzuleiten. Auf diese Weise kann die Drehzahl des Motors auf einen gewünschten Wert gebracht und gehalten werden und dabei das Drehmoment des Motors entsprechend der Stromführungsgrösse gesteuert werden. Es handelt sich bei diesem Stand der Technik um eine typische Strombegrenzungsregelung für den Dauerbetrieb des Motors, deren Zweck es ist, die Leistung des Motors im Dauerbetrieb (d.h. unter im wesentlichen konstanten Bedingungen) optimal zu steuern.

Zur optimalen Steuerung des Motors im transienten Betrieb, d.h. bei sich verhältnismässig schnell ändernden Bedingungen (dynamische Steuerung von gewünschten Drehzahländerungen gegebenenfalls bei variabler Belastung) werden keine Vorkehrungen getroffen.

Aufgabe der Erfindung ist es, ein Verfahren der eingangs genannten Art, eine Einrichtung zur Ausführung des Verfahrens und ein zur Ausführung des Verfahrens geeignetes Motorensystem anzugeben, mit welchen im transienten Betrieb stets der maximal nutzbare Drehzahlbereich des verwendeten Motors verfügbar ist und im Motorensystem mit einem Minimum an Motordefinitionen ein Maximum an Drehzahlbereich abgedeckt werden kann, insbesondere weil die Regelung der Drehzahl keine Begrenzung des Ständerstroms und keine Absenkung der Ständerspannung unter die für den Motor zulässigen Höchstwerte benötigt.

Die Erfindung geht aus von der Erkenntnis, dass (1) die statischen Eigenschaften eines Mehrphasen-Asynchronmotors im wesentlichen genügend definiert werden, wenn eine Drehmoment/Drehzahl-Kennlinie des Motors angegeben wird, die ihrerseits von der magnetischen Sättigung der Eisenteile im Motor bestimmt wird, und (2) die dynamischen Eigenschaften des Motors durch je eine elektrische und eine mechanische Zeitkonstante bestimmt werden, woraus sich ergibt, dass die Umwandlung von elektrischer Energie in kinetische Energie (oder umgekehrt bei Generatorbetrieb) in einer durch den Motor bestimmten endlichen Zeit abläuft.

Das Zusammenwirken dieser statischen und dynamischen Eigenschaften des Motors ergibt, dass die Eigenschaften des Motors im wesentlichen genügend definiert werden, wenn ein Betriebsspannung/Betriebsfrequenz-Kennwert zusammen mit dem Drehmoment angegeben wird. Daraus ergibt sich wiederum, dass es möglich ist, für einen bestimmten Mehrphasen-Asynchronmotor bei stetiger Ständerspannung-Frequenz-Kennlinie den Ständerstrom über dessen Frequenz zu steuern, und zwar so, dass der Ständerstrom einen von einer Stromführungsgrösse vorbestimmten Wert beibehält, wenn die Betriebsbedingungen (Last, Drehzahl usw.) sich ändern oder zu ändern sind. Dieser vorbestimmte Wert des Ständerstroms ist dabei im Prinzip frei wählbar. Um aber die bestmögliche Wirkleistung des Motors zu erhalten, ist der vorbestimmte Wert des Ständerstroms innerhalb des Bereiches zu wählen, in welchem das Drehmoment des Motors dem Ständerstrom etwa proportional ist. Folglich empfiehlt sich, die den Ständerstrom bestimmende Stromführungsgrösse so zu wählen, dass ein Drehmoment zwischen Null und dem Kippmoment des Motors erreicht wird. Daher ist die Stromfürungsgrösse zwischen Null und demjenigen (vom der Magnetisierung abhängigen) Effektivwert des Ständerstroms zu wählen, mit welchem das Kippmoment erreicht wird.

Anhand dieser Erkenntnisse wird, zur Erreichung der eingangs angegebenen Aenderung der Drehzahl eines Mehrphasen-Asynchronmotors, das erfindungsgemässe Verfahren dadurch gekennzeichnet, dass
- (a): die Frequenz des Ständerstroms entsprechend dem Sinn der gewünschten Drehzahländerung mit einer vorbestimmten Frequenzänderungsrate geändert wird,
- (b): der sich nun zufolge der Frequenzänderung ändernde Effektivwert des Ständerstroms gemessen und mit der Stromführungsgrösse verglichen wird,
- (c): falls der gemessene Effektivwert des Ständerstroms grösser ist als die Stromführungsgrösse, die Frequenz zeitweise auf dem erreichten Wert gehalten wird,
- (d): die erreichte Frequenz mit der Soll-Drehzahl verglichen wird,
- (e): falls die erreichte Frequenz unter Berücksichtigung eines der Stromführungsgrösse entsprechenden Motor-Schlupfes der Soll-Drehzahl entspricht, die Frequenz definitiv auf dem erreichten Wert konstant gehalten wird, womit das Verfahren beendet ist,
- (f): anderenfalls die Frequenz konstant gehalten wird, bis der nun zufolge der Drehzahländerung sinkende Effektivwert des Ständerstroms kleiner geworden ist als die Stromführungsgrösse, und dann die Folge von Verfahrensschritten ab Verfahrensschritt (a) wiederholt wird.

Dabei kann die Drehzahländerung sowohl eine Beschleunigung als auch eine Abbremsung sein. Wenn der mehrphasige Ständerstrom des Motors von einem Wechselrichter geliefert wird, der elektrische Energie von einem Wechselspannungsnetz bezieht und über einen Gleichrichter als Gleichstrom erhält, kann der Motor von der bezogenen elektrischen Energie beschleunigt oder gebremst werden. Der Motor wird auf jeden Fall gebremst, wenn der Wechselrichter bei Spannungsausfall am Wechselspannungsnetz elektrische Energie vom mehrphasigen Ständerstrom des Motors bezieht, in Gleichtrom wandelt und zu einem Energiespeicher und/oder Lastwiderstand durchschaltet.

Es ist möglich und im wesentlichen äquivalent, den Effektivwert des Ständerstroms auf der Wechselstromseite des Wechselrichters direkt oder auf der Gleichstromseite des Wechselrichters indirekt (beispielsweise als Spannungsabfall an einem Messwiderstand) zu messen.

Mit dem erfindungsgemässen Verfahren erfolgt die Drehzahländerung im wesentlichen unter Konstanthaltung des Drehmoments auf den der Stromführungsgrösse entsprechenden Wert. Vereinfacht ausgedrückt wird beim erfindungsgemässen Verfahren der Energiefluss in den Läufer über die Frequenz bei frequenzproportionaler Ständerspannung gesteuert. Damit wird verhindert, dass der Motor bei hohem Schlupf, vermindertem Wirkungsgrad und hoher Verlustleistung im Läufer in einem Bereich arbeitet, wo der Strom dem Drehmoment nicht proportional ist. Die Drehzahländerung kann insofern optimiert werden, als sie wahlweise z.B. mit dem maximal zulässigen Ständerstrom und Drehmoment (Kippmoment) oder z.B. mit dem maximal oder optimal mit der Last verträglichen Drehmoment erfolgt. Wird mit dem maximal zulässigen Drehmoment beschleunigt oder gebremst, bo entwickelt der Motor seine durch physikalische Grenzen gegebene bestmöglichen Eigenschaften hinsichtlich Dynamik und Wirkungsgrad, d.h. er hat die kleinste elektrische und mechanische Zeitkonstante. In anderen Worten, die Aenderungsrate der Drehzahl über die Zeit ist dann maximal.

Im Falle der Beschleunigung ist der Momentanwert der Ständerspannung von der momentanen Frequenz des Wechselrichters abhängig, während die tatsächliche Ständerspannung von der Motorschaltung (Sternschaltung oder Dreieck- bzw . Viereckschaltung) abhängig ist, und der Maximalwert der möglichen Ständerspannung wird durch die von der Netzspannung abhängigen Gleichspannung bestimmt. Damit wird automatisch immer die höchste mit der verwendeten Netzspannung mögliche Antriebsleistung zum Motor geführt. Wenn die Variation der Ständerspannung über die Frequenz wegen nicht ausreichender Netzspannung vom charakteristischen Betriebsspannung/Betriebsfrequenz-Kennwert des Motors abweicht, tritt sogenannte Feldschwächung ein. Diese kann anhand der genannten Abweichung festgestellt und mit Vorteil (im Sinne einer Information über die aktuellen Betriebsbedingungen) signalisiert werden.

In einer ersten Ausführungsweise des Verfahrens kann die Frequenzänderungsrate so klein gewählt werden, dass die resultierende Variation der Drehzahl über die Zeit im wesentlichen stetig verläuft, weil der Effektivwert des Ständerstroms nicht merklich grösser wird als die Stromführungsgrösse und somit die Frequenz während einer nur unmerklich kurzen Zeit konstant gehalten wird. Zu diesem Zweck wird die Frequenzänderungsrate beispielsweise so gewählt, dass die resultierende Frequenzänderung etwa 3 bis 5 % der momentanen Frequenz, d.h. etwa die halbe Grösse des Schlupfes des Motors nicht übersteigt. Die geeignete Frequenzänderungsrate steht in Beziehung zur jeweiligen elektrischen Zeitkonstante des verwendeten Motors, dieser steht wiederum in Beziehung zum Motorensystem als relative Grösse. Eine geeignete Frequenzänderungsrate beträgt beispielsweise 0,1 Hz/µs für eine Verwendung zum Antrieb von Hochgeschwindigkeitsspindeln.

In einer zweiten Ausführungsweise des Verfahrens kann die Frequenzänderungsrate so gross gewählt werden, dass die Kennlinie der resultierenden Variation der Drehzahl über die Zeit im wesentlichen als Feston, d.h. girlandenförmig verläuft, weil der Effektivwert des Ständerstroms bei jeder Frequenzänderung merklich grösser wird als die Stromführungsgrösse und somit die Frequenz während einer merklichen Zeitdauer konstant gehalten wird. Diese Zeitdauer, während der der Motor seine Drehzahl durch Umwandlung von elektrischer Energie in mechanische Energie erhöht, ist allein von bestimmten Eigenschaften des Antriebs abhängig, nämlich von einer induktiven elektrischen Grösse, vom Wirkungsgrad des Motors, vom Trägheitsmoment des Motors, vom Trägheitsmoment der Last sowie von dem von der Last bewirkten Belastungsmoment. Die genannte Zeitdauer ist also eine Folge der unmittelbar vorangegangenen Frequenzänderung und steht in fester Beziehung damit, so dass die Form eines einzelnen Elements des Festons die genannten Eigenschaften des Antriebs zu beschreiben erlaubt. Diese Eigenschaften des Antriebs weisen eine gewisse Analogie mit der Drehsteifigkeit einer Welle auf: sie können daher als "Drehsteifigkeit des Antriebs" bezeichnet werden. Die betreffende Analyse der Variation der Frequenz über die Zeit, also der Kennwerte (eine elektrische und eine mechanische Konstante), welche die Form und Grösse eines Elements der girlandenförmigen Kennlinie bezeichnen, kann beispielsweise mit Hilfe eines entsprechend programmierten Mikrocomputers erfolgen, welcher daraus die Angabe eines Masses für die "Drehsteifigkeit des Antriebs" ableitet und gegebenenfalls zur Anzeige bringt.

Es ist dabei zu bemerken, dass es bei der Ausführung des erfindungsgemässen Verfahrens nicht nötig ist, die Drehzahl des Motors oder dessen Schlupf zu messen. Insbesondere wird kein Drehzahlsensor benötigt. Entsprechend einfach ist daher die zur Ausführung des erfindungsgemässen Verfahrens benötigte Einrichtung. Der Schlupf stellt sich von selbst im wesentlichen auf den konstanten Wert ein, der von der Stromführungsgrösse bestimmt wird. Somit stellt sich auch eine konstante Verlustleistung ein, was die thermischen und kinetischen Betriebsbedingungen vorteilhaft konstant hält, wenn die Stromführungsgrösse gleich dem Arbeitsstrom gewählt wird.

Bei einer Abbremsung kann vor Durchführung der nächsten Frequenzänderung festgestellt werden, dass die Frequenz des Ständerstroms kleiner ist als ein vorbestimmter Grenzwert, und der Wechselrichter kann dann so gesteuert werden, dass er dem Ständer des Motors Gleichstrom zuführt, um den Läufer zu stoppen, oder als vektorgesteuerten Gleichstrom diesen Vorgang zu verwenden, um den Läufer bzw. einen vom Läufer bewegten Gegenstand mit Hilfe von Positionssensoren in eine definierte Position zu bringen oder sehr langsame Drehbewegungen ausführen zu lassen (Bereich niedrigster Drehzahlen). Dabei kann die Intensität des Gleichstroms zunächst während einer vorbestimmten Zeitdauer im wesentlichen gleich dem Effektivwert des Motor-Nennstroms sein und danach auf einen Bruchteil der genannten Intensität reduziert werden. Auch diese Vorgänge können beispielsweise mit Hilfe eines entsprechend programmierten Microcomputers erfolgen.

Um die im vorangehenden beschriebenen Funktionen auszuführen, umfasst eine dem Wechselrichter vorgeschaltete Steuerung einen Mikrocomputer, der entsprechend programmiert ist, unter anderem um dem Wechselrichter zum geeigneten Zeitpunkt die geeigneten Signale für die Zündung von schaltbaren Halbleiterelementen beispielsweise vom Typ IGBT ("isolated gate bipolar transistor"). Dieser Steuerung bzw. ihrem Mikrocomputer werden unter anderem die Stromführungsgrösse und die Frequenzänderungsrate sowie der charakteristische Betriebsspannung/ Betriebsfrequenz-Kennwert und der Ständerstrom für das maximale Drehmoment des verwendeten Mehrphasen-Asynchronmotors beispielsweise manuell eingegeben. Auf der Gleichstromseite des Wechselrichters ist beispielsweise ein Messwiderstand in Reihenschaltung zwischen dem Gleichrichter und dem Wechselrichter vorgesehen, um den Ständerstrom als Wert eines Spanungsabfalls an diesem Messwiderstand zu messen, wobei dieser Wert der Steuerung bzw. ihrem Mikrocomputer zugeführt wird.

Die Tatsache, dass das erfindungsgemässe Verfahren vom konstanten charakteristischen Betriebsspannung/Betriebsfrequenz-Kennwert eines Mehrphasen-Asynchronmotors bei Abgabe des Nenndrehmomentes im Dauerbetrieb ausgeht, um den Motor über die Frequenz des Ständerstroms zu steuern, hat auch zur Folge, dass es mit einfachen Mitteln möglich ist, den mit einem gegebenen Mehrphasen-Asynchronmotor nutzbaren Frequenzbereich wesentlich zu erweitern.

Wenn nämlich der Betrieb des Wechselrichters zwischen der Speisung des Motors entsprechend dessen Betriebsspannung/Betriebsfrequenz-Kennwert für Sternschaltung und der Speisung des Motors entsprechend dessen Betriebsspannung/Betriebsfrequenz-Kennwert für Dreieckschaltung (bei einem dreiphasigen Motor) bzw. Viereckschaltung (bei einem vierphasigen Motor) umgeschaltet und gleichzeitig der der Steuerung eingegebene Betriebsspannung/Betriebsfrequenz-Kennwert um einen Faktor √3 bzw. √2 vermindert wird, kann der nutzbare Drehzahlbereich bei im wesentlichen gleichbleibendem Drehmoment um den gleichen Faktor √3 bzw. √2 erhöht werden, was auch die Antriebsleistung um den gleichen Faktor √3 bzw. √2 erhöht.

Es ist aber auch möglich, gleichzeitig die Frequenz des Ständerstroms im gleichen Sinn um den gleichen Faktor zu ändern wie der der Steuerung eingegebene Betriebsspannung/Betriebsfrequenz-Kennwert, derart, dass die Magnetisierungsverhältnisse im Ständer und somit auch das Drehmoment des Motors konstant bleiben.

Bei einem dreiphasigen Motor bilden die von der Steuerung zuführbaren Betriebsspannung/Betriebsfreguenz-Kennwerte vorzugsweise eine geometrische Folge im Verhältnis 1:√3:3:3√3, d.h. mit dem Quotienten √3 als Bildungsgesetz. Dann umfasst der nutzbare Drehzahlbereich eines gegebenen, durch Drehmoment und Betriebsspannung/ Betriebsfrequenz-Kennwerte für Stern- bzw. Dreickschaltung definierten dreiphasigen Motors nacheinander (a) einen ersten Bereich, bei welchem der Motor in Sternschaltung gespeist wird und der dem Wechselrichter eingegebene Betriebsspannung/Betriebsfrequenz-Kennwert um einen Faktor √3 höher liegt als der den Motor definierende Betriebsspannung/Betriebsfrequenz-Kennwert für Sternschaltung (hohe Sättigung), (b) einen zweiten Bereich, bei welchem der Motor weiterhin in Sternschaltung gespeist wird und nun der dem Wechselrichter eingegebene Betriebsspannung/Betriebsfrequenz-Kennwert gleich dem den Motor definierenden Betriebsspannung/Betriebsfrequenz-Kennwert für Sternschaltung ist (normale Sättigung), (c) einen dritten Bereich, bei welchem der Motor in Dreieckschaltung gespeist wird und der dem Wechselrichter eingegebene Betriebsspannung/Betriebsfrequenz-Kennwert um einen Faktor √3 tiefer liegt als der den Motor definierende Betriebsspannung/Betriebsfrequenz-Kennwert für Dreieckschaltung (normale Sättigung), (d) einen vierten Bereich, bei welchem der Motor weiterhin in Dreieckschaltung gespeist wird und nun der dem Wechselrichter eingegebene Betriebsspannung/ Betriebsfrequenz-Kennwert wieder um einen Faktor √3 tiefer liegt als der den Motor definierende Betriebsspannung/Betriebsfrequenz-Kennwert für Dreieckschaltung und damit den Motor schwächer sättigt, aber nochmals eine Drehzahlerhöhung um einen Faktor √3 bringt. Diese Folge von möglichen Betriebsbereichen erlaubt, den Motor von den niedrigsten Drehzahlen (Abbremsvorgang, Positioniervorgang) bis zur höchsten zulässigen Oberflächengeschwindigkeit des Läufers zu betreiben, was für einen einzigen Motor einen nutzbaren Drehzahlbereich mit zueinander im Verhältnis 1:1000 oder mehr stehender niedrigster und höchster erreichbarer Drehzahl ergibt. Mit Ausnahme des Bereiches, bei welchem schwächere Sättigung eintritt, wird dabei der Motor mit dem Nenndrehmoment betrieben. Der hier erreichte Drehzahlbereich wird mit konventioneller Antriebstechnik durch 5 verschiedene Motorentypen erreicht.

Ausserdem ist es dabei möglich, in einem Motorensystem eine Folge von Dreiphasen-Asynchronmotoren bereitzustellen, die durch ihr gleiches maximales Drehmonent (um die maximale Leistungen gleicher Läufergeometrie bestimmen zu können) und ihre voneinander verschieden definierten Betriebsspannung/Betriebsfrequenz-Kennwerte (bzw. durch den jeweiligen Umkehrwert in Hz/Volt) bestimmt sind. Dabei ist der einem dieser Motoren entsprechende Betriebsspannung/Betriebsfrequenz-Kennwert jeweils eines der Glieder einer mit √3 als Quotient gebildeten geometrischen Folge, so dass die Motoren dieses Motorensystems untereinander und in Verbindung mit dem Wechselrichter mit dem Quotienten √3 als Bildungsgesetz abgestimmt sind. Ein solches Motorensystem ist Gegenstand der Erfindung, und ein beliebiger dieser Motoren eines solchen Motorensystems wird dann an den Wechselrichter angeschlossen, wobei zur Ausführung des erfindungsgemässen Verfahrens über den Faktor √3 im Wechselrichter eine automatische Anpassung bezüglich Frequenzänderungsrate, Gleichstrombremse, gegebenenfalls Vektorsteuerung für sehr niedrige Drehzahlen oder Abwandlung der Gleichstrombremse zum präzisen Positionieren erfolgt.

Dabei bezieht sich das Bildungsgesetz zur Optimierung des Motorensystems mit dem Quotienten √3 auf Dreiphasen-Asynchronmotoren. Es ist möglich, eine Näherung dieses Bildungsgesetzes über die Anzahl der Polpaare des Motors zu erreichen: geeignete Anzahlen von Polpaaren, welche technisch sinnvolle Lösungen und Drehzahlbereiche ergeben und die Austauschbarkeit der Motoren untereinander erlauben, sind 1, 2, 3, 5, 9, usw., d.h. bei einer Näherung des Bildungsgesetzes über die Anzahl der Polpaare sind Motoren bereitzustellen, die jeweils 2-polig, 4-polig, 6-polig, 10-polig, 18-polig usw. sind.

Von zwei solchen im Motorensystem "benachbarten" Motoren, die zwei aufeinanderfolgenden Gliedern der geometrischen Folge entsprechen, kann (bei einer entsprechend vorgegebenen Betriebsfrequenz fᵢ beispielsweise von 50 Hz) der eine wahlweise in einem Frequenzband von Null bis zur Frequenz fᵢ, √3.fᵢ, 3.fᵢ oder 3√3.fᵢ betrieben werden, während der andere wahlweise in einem Frequenzband von Null bis zur Frequenz 9fᵢ, 9√3.fᵢ, 27.fᵢ und 27√3.fᵢ betrieben werden kann. Den jeweiligen Betriebsspannung/Betriebsfrequenz-Kennwerten dieser beiden im Motorensystem definierten "benachbarten" Motoren entsprechen somit zwei Glieder einer geometrischen Folge, die mit 9 als Quotient gebildet ist. Mit solch zwei Motoren kann ein etwa 47mal grösserer Frequenzvariationsbereich erhalten werden als mit einem einzigen Motor innerhalb eines einzigen Frequenzvariationsbereiches.

Aus Gründen der praktischen Anwendung wird eher ein Motorensystem in Betracht gezogen, bei welchem die Frequenzbänder der Motoren um jeweils eine oder zwei Frequenzstufen überlappen: von zwei "benachbarten" Motoren, die aufeinanderfolgenden Gliedern der geometrischen Folge entsprechen, kann hier (bei einer entsprechend vorgegebenen Betriebsfrequenz fᵢ beispielsweise von 50 Hz) der eine wahlweise in einem Frequenzband von Null bis zur Frequenz fᵢ, √3.fᵢ, 3.fᵢ oder 3√3.fᵢ betrieben werden, während der andere wahlweise in einem Frequenzband von Null bis zur Frequenz 3√3.fᵢ, 9fᵢ, 9√3.fᵢ und 27.fᵢ (bei Ueberlappung um jeweils eine Frequenzstufe) bzw. bis zur Frequenz 3.fᵢ, 3√3.fᵢ, 9fᵢ und 9√3.fᵢ (bei Ueberlappung um jeweils zwei Frequenzstufen) betrieben werden kann. Den jeweiligen Betriebsspannung/Betriebsfrequenz-Kennwerten dieser im'Motorensystem "benachbarter" Motoren entsprechen somit zwei Nachbarglieder einer geometrischen Folge, die mit 3√3 bzw. 3 als Quotient gebildet ist. Mit solch zwei "benachbarten" Motoren kann ein um 9√3 bzw. 27 grösserer nutzbarer Frequenzbereich (und somit Drehzahlbereich) erfasst werden, als mit einem dieser beiden Motoren allein erfasst werden könnte.

Bei einem vierphasigen Motor bilden die der Steuerung zuführbaren Betriebsspannung/Betriebsfrequenz-Kennwerte vorzugsweise eine geometrische Folge im Verhältnis 1:√2:2:2√2, d.h. mit dem Quotienten √2 als Bildungsgesetz. Die vorstehenden Erläuterungen zum Fall des dreiphasigen Motors lassen sich auf den vierphasigen Motor übertragen, der mit einem solchen Motorensystem erfassbare nutzbare Frequenzbereich (und somit Drehzahlbereich) kann um einen entsprechenden Faktor 8 bzw. 4√2 bzw. 4 erweitert werden.

Erfindungsgemäss kann beim verwendeten Motor des Motorensystems die Abhängigkeit des Ständerstroms von dessen Frequenz und von der Ständerspannung bestimmt und daraus ermittelt werden, welchen Betriebsspannung/Betriebsfrequenz-Kennwert der an den Wechselrichter angeschlossene Motor aufweist und, in Abhängigkeit davon und von der Schaltung des Wechselrichters in Sternschaltung oder Dreieckschaltung bzw. Viereckschaltung, welche Betriebsspannung/Betriebsfrequenz-Kennwerte der Steuerung eingegeben werden können.

Aus der Zuordnung der Betriebsspannung/Betriebsfrequenz-Kennwerte (bzw. deren Umkehrwert in Hz/Volt) zu den Motoren leitet sich beim Bremsvorgang auch die zugehörige Frequenz der Bremsimpulse ab, womit sich immer eine optimale Anpassung an die jeweils zu bremsende induktive Last ergibt.

Eine Einrichtung zur Ausführung des erfindungsgemässen Verfahrens umfasst die verschiedenen dazu benötigten Mittel und insbesondere
- Mittel zur Einstellung einer Soll-Drehzahl;
- Mittel zur Einstellung einer Stromführungsgrösse;
- Mittel zur Einstellung einer Frequenzänderungsrate;
- Mittel zur Konstanthaltung der Frequenz des Ständerstroms oder zu deren Aenderung mit der Frequenzänderungsrate in Abhängigkeit von einem entsprechenden Signal für die Freigabe der Aenderung;
- Mittel zur Messung eines Effektivwerts des Ständerstroms;
- Mittel zum Vergleich des Effektivwerts des Ständerstroms mit der Stromführungsgrösse und zur Abgabe eines entsprechenden Vergleichssignals; und
- Mittel zur Erzeugung des Freigabesignals in Abhängigkeit von den Vergleichssignalen.

Diese Mittel werden weiter unten anhand eines Beispiels einer Ausführung der Einrichtung näher beschrieben.

Nachstehend wird die Erfindung unter Bezugnahme auf die Zeichung näher beschrieben. Es zeigen:
- Fig. 1: ein prinzipielles Blockschaltbild einer Einrichtung zur Ausführung des erfindungsgemässen Verfahrens;
- Fig. 2: ein prinzipielles Blockschaltbild eines Steuerungsteils der Einrichtung zur Durchführung des erfindungsgemässen Verfahrens; und
- Fig. 3: eine graphische Darstellung des Verlaufes der Frequenz des Ständerstroms über die Zeit und einen vergrösserten Ausschnitt dieses Verlaufes.

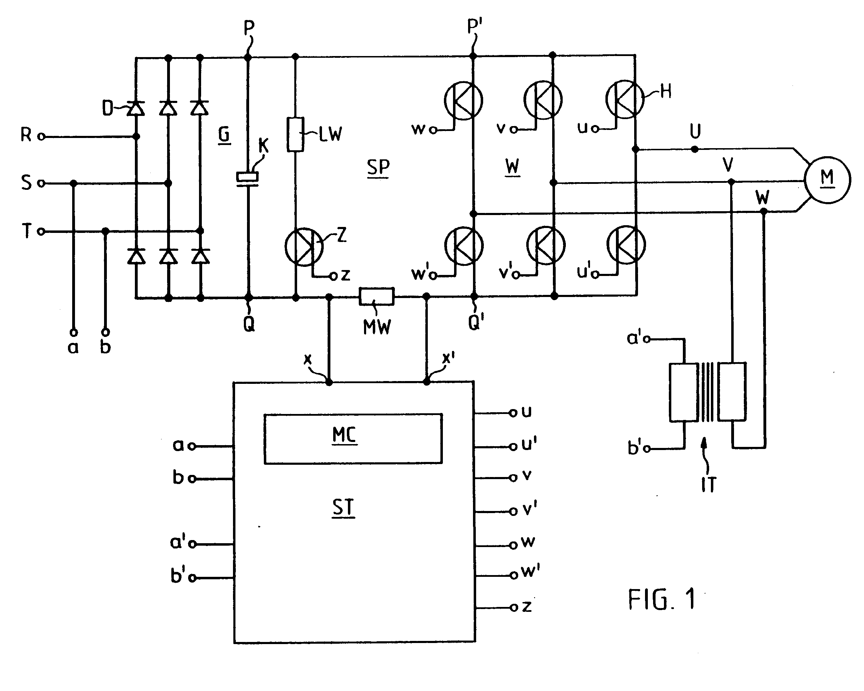

In Fig. 1 wird eine Einrichtung zur Ausführung des erfindungsgemässen Verfahrens am Beispiel eines Dreiphasen-Asynchronmotors erläutert. Die Einrichtung umfasst zunächst ein Speisungsteil SP eines Dreiphasen-Asynchronmotors M sowie ein Steuerungsteil ST für den Speisungsteil SP dargestellt. Ein Gleichrichter G umfasst in üblicher Schaltung 6 gleichartige Dioden D und einen Glättungskondensator K. Der Gleichrichter G bezieht elektrische Energie in Form von Wechselstrom aus einem Wechselspannungsnetz R,S,T beispielsweise von 220/380 Volt, 50 Hz, und liefert elektrische Energie in Form von Gleichstrom zwischen den Klemmen P,Q. Zwischen diesen Klemmen P,Q könnte auch direkt Gleichspannung aus irgendeiner geeigneten quelle eingespeist werden.

Ein Wechselrichter W umfasst in üblicher Schaltung 6 gleichartige schaltbare Halbleiterelemente H beispielsweise vom Typ IGBT ("isolated gate bipolar transistor"). Der Wechselrichter W bezieht elektrische Energie in Form von Gleichstrom zwischen den Klemmen P',Q' und liefert elektrische Energie in Form von Wechselstrom variabler Frequenz auf den Klemmen U,V,W und zum dreiphasigen Ständer des Asynchronmotors M. Auf bekannte Weise, je nach dem Zeitpunkt der Ansteuerung der Halbleiterelemente H (Klemmen u,u',v,v',w,w') durch den Steuerungsteil ST in Abhängigkeit von der Phase des Ständerstroms auf den Klemmen U,V,W, wird dann der Motor M von der vom Wechselrichter W gelieferten elektrischen Energie betrieben, beschleunigt oder gebremst. Die Steuerung dieser Funktion wird im dargestellten Ausführungsbeispiel von einem im Steuerungsteil ST enthaltenen Mikrocomputer MC wahrgenommen, könnte aber auch auf andere bekannte Weise erfolgen.

Die Klemmen P und P' sind miteinander direkt verbunden, während die Klemmen Q und Q' über einen Messwiderstand MW miteinander verbunden sind, so dass der zwischen den Klemmen P und P' bzw. Q und Q' fliessende Gleichstrom über den Spannungabfall am Messwiderstand MW messbar ist. Zur Auswertung dieses Spannungsabfalls wird dieser vom Messwiderstand MW zum Steuerungsteil ST zugeleitet (Klemmen x,x').

Vom Wechselspannungsnetz R,S,T (Klemmen S,T im dargestellten Beispiel) führt eine Speiseleitung (Klemmen a,b) zum Steuerungsteil ST.

Ein eventueller Spannungsausfall am Wechselspannungsnetz R,S,T wird im Steuerungsteil ST festgestellt, worauf der Steuerungsteil ST seine Speisung selbsttätig einer Hilfspeiseleitung (Klemmen a',b') entnimmt, die ihrerseits elektrische Energie vom Motor M (Klemmen V,W) über einen Isolationstransformator IT bezieht. Somit wird der Steuerungsteil ST bei Spannungsausfall weiterhin mit elektrischer Energie versorgt. Die Steuerung auch dieser Funktion wird vom Mikrocomputer MC wahrgenommen, welcher zudem so programmiert ist, dass er beim Eintreten dieser Situation unverzüglich einen Bremsvorgang einleitet. Der Versorgung des Steuerungsteils ST bei Spannungsausfall am Netz dient gerade die elektrische Energie, die der Motor während des Bremsvorganges erzeugt, und dies bis der Motor im wesentlichen energiefrei geworden ist, so dass ein hoher Sicherheitsgrad des Antriebs gewährleistet ist.

Ausserdem ist im Steuerungsteil ST ein weiteres schaltbares Halbleiterelement Z beispielsweise vom gleichen Typ wie die Halbleiterelemente H vorgesehen. Das Halbleiterelement Z ist normalerweise nicht leitend.

Bei Spannungsüberhöhung am Glättungskondensator K wird das Halbleiterelement Z vom Steuerungsteil ST leitend geschaltet (Klemme z), um die Klemmen P,Q über einen Lastwiderstand LW zu verbinden und so den Glättungskondensator K vor Ueberspannung zu schützen.

Bei Spannungsausfall am Gleichrichter G werden die Halbleiterelemente H in Abhängigkeit von der Phase des Ständerstroms auf den Klemmen U,V,W so angesteuert, dass der dreiphasige Ständerstrom des Motors M elektrische Energie liefert, die vom Wechselrichter W in Gleichtrom (Klemmen P',Q') gewandelt wird, der dann vom Halbleiterelement Z (klemme z) zum Lastwiderstand LW durchgeschaltet wird. Daraufhin wird die im Motor M gespeicherte mechanische Energie im Lastwiderstand LW thermisch verbraucht und der Motor M wird gebremst.

Auch bei diesem Vorgang ist der Glättungskondensator K vor Ueberspannung zu schützen, insbesondere wenn die Energie des Bremsvorgangs nicht genügend schnell in den Lastwiderstand LW gebracht werden kann. Dazu wird ein Hysteresefenster mit je einem vorgegebenen Höchstwert und Tiefstwert (beispielsweise 650 bis 750 Volt) definiert, und der Lastwiderstand LW ist angeschaltet (Halbleiterelement Z vom Steuerungsteil ST leitend geschaltet, Klemme z), wenn die Gleichspannung am Glättüngskondensator K innerhalb dieses Hysteresefensters liegt. Uebersteigt die Gleichspannung am Glättungskondensator K den vorgegebenen Höchstwert, so bleibt der Lastwiderstand LW eingeschaltet, aber der Steuerungsteil ST veranlasst den Wechselrichter W (Klemmen u,u',v,v',w,w') den Ständerstrom des zu bremsenden Motors M abzuschalten. Da der Motor M nicht mehr erregt ist und daher nicht als Generator arbeitet, sinkt die Gleichspannung am Glättungskondensator K, weil die im Glättungskondensator K gespeicherte elektrische Energie im Lastwiderstand LW thermisch verbraucht wird. In dieser Zeit wird auch die Frequenzänderung am Wechselrichter W vom Steuerungsteil ST angehalten. Da der Motor M ungebremst weiterläuft, behalten der Motor M und der Wechselrichter W annähernd die gleiche Umlaufgeschwindigkeit (Drehzahl des Motors M, Frequenz des Wechselrichters W). Wenn dann die Gleichspannung am Glättungskondensator K unter den vorgegebenen Tiefstwert gesunken ist (d.h. der Lastwiderstand LW den Glättungskondensator K genügend entladen hat), veranlasst der Steuerungsteil ST den Wechselrichter W (Klemmen u,u',v,v',w,w'), den Ständerstrom wieder anzuschalten, so dass der Motor M wieder erregt ist und wieder als Generator arbeitet, wodurch der Bremsvorgang fortgesetzt wird. Die Steuerung ebenfalls dieser Funktion wird vom Mikrocomputer MC wahrgenommen.

Solch ein wiederholt aussetzender Bremsvorgang ist natürlich weniger wirksam als ein stetiger Bremsvorgang. Die Ursache liegt bei einem zu hochohmigen Lastwiderstand LW, und es ist zweckmässig, dies vom Steuerungsteil ST bzw. vom Mikrocomputer MC signalisieren zu lassen.

Grundsätzlich entsprechen der Bremsvorgang und der Beschleunigungsvorgang einander, nur fliesst der Strom durch den Messwiderstand MW in die eine oder die andere Richtung und die Frequenzänderung erfolgt in die eine oder die andere Richtung (Anstieg oder Abfall).

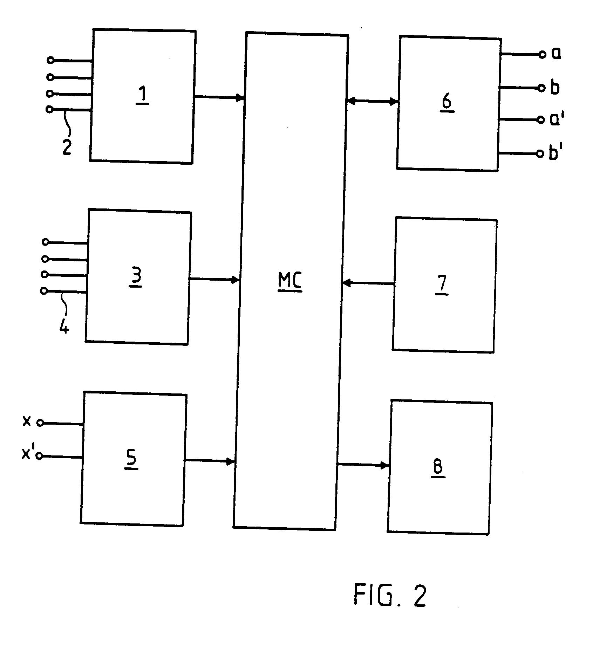

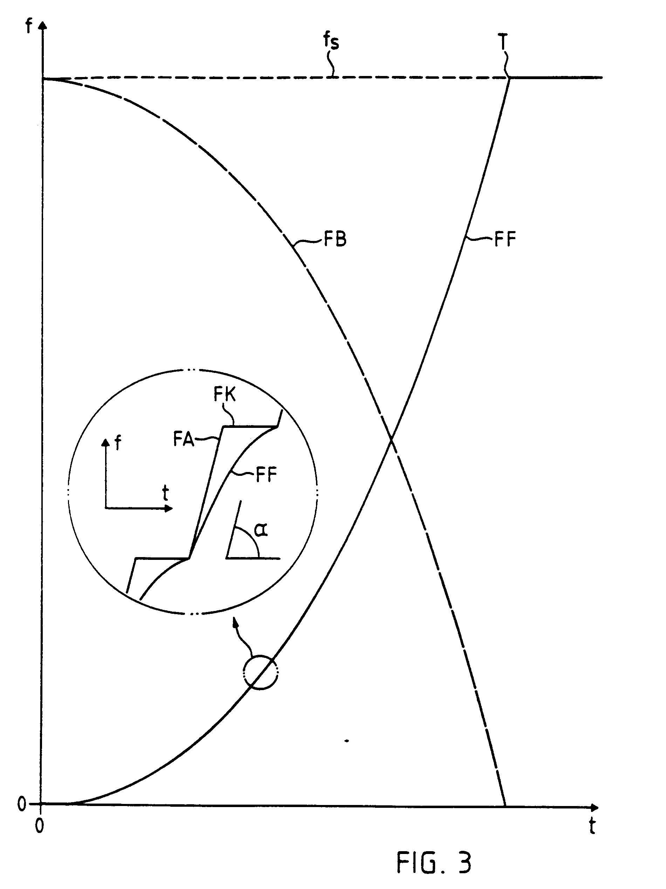

Die Erläuterung des erfindungsgemässen Verfahrens wird nun unter besonderen Bezugnahme auf Fig. 2 und 3 weitergeführt.

In Fig. 2 wird die Funktion des Steuerungsteils ST mit Hilfe eines Blockschaltbilds veranschaulicht.

Zur Durchführung des erfindungsgemässen Verfahrens wird zunächst dem Steuerungsteil ST eine Stromführungsgrösse vorgegeben, die im Steuerungsteil ST einen gewünschten und nicht wesentlich zu überschreitenden Effektivwert des dreiphasigen Ständerstroms des Motors M während der Drehzahländerung (Beschleunigung oder Bremsung) bestimmt. Die Stromführungsgrösse kann am Steuerungsteil ST beispielsweise digital eingestellt oder sonstwie eingegeben werden: in Fig. 2 wird ein Digitalwert dem Speicher 1 über die Leitungen 2 eingegeben (stellvertretend für die benötigte Anzahl Leitungen sind nur 4 davon dargestellt worden).

Ferner wird dem Steuerungsteil ST eine zu erreichende Soll-Drehzahl des Motors M eingegeben. Auch die Soll-Drehzahl kann am Steuerungsteil ST beispielsweise digital eingestellt oder sonstwie eingegeben werden: in Fig. 2 wird ein Digitalwert dem Speicher 3 über die Leitungen 4 eingegeben (auch hier sind nur 4 davon dargestellt worden).

Es sei hier noch erwähnt, dass diese eingegebene Soll-Drehzahl des Motors M über den Quotienten √3 (als Bildungsgesetz für die Folge von Motoren im Motorensystem) mit dem jeweils verwendeten Motor in Beziehung steht und entsprechend zu wählen ist. Wird dem Steuerungsteil ST anstelle der absoluten Soll-Drehzahl ein relativer Wert eingegeben, beispielsweise ein prozentualer Wert zwischen 0 und 100 % der höchstzulässigen Drehzahl, so kann der Steuerungsteil ST selbsttätig dafür sorgen, dass der eingegebene relative Wert mit dem geeigneten Faktor aus der mit √3 als Quotienten gebildeten Folge multipliziert wird, um die vom Steuerungsteil ST benötigte absolute Soll-Drehzahl des Motors M zu ergeben.

Ausserdem wird dem Steuerungsteil ST die vorbestimmte Frequenzänderungsrate eingegeben. Diese kann mit Vorteil demselben Speicher 3 und auf gleiche Weise wie die Soll-Drehzahl des Motors M eingegeben werden, da beide Grössen in derselben Einheit (dimenbionslose Zahl pro Zeiteinheit) vorliegen. In einer Variante könnte die Frequenzänderungsrate, weil sie normalerweise nicht oft geändert werden, der weiter unten näher beschriebenen Eingabevorrichtung 7 eingegeben werden.

Die Drehzahl wird dem Mikrocomputer MC zugeführt, der nun feststellt, ob die Frequenz des Ständerstroms zu erhöhen oder zu vermindern ist, um die Soll-Drehzahl des Motors M durch Aenderung der Frequenz des elektrischen Drehfeldes zu erreichen. Entsprechend dieser Feststellung, d.h. entsprechend dem Sinn der sich ergebenden Drehzahländerung, veranlasst der Mikrocomputer MC, dass der Steuerungsteil ST nun den Wechselrichter W so steuert, dass die Frequenz des Ständerstroms mit der vorbestimmten Frequenzänderungsrate geändert wird.

Der Mikrocomputer MC vergleicht nun die Soll-Drehzahl mit der aus der Aenderung resultierenden Frequenz des Ständerstroms. Dabei berücksichtigt der Mikrocomputer MC, dass sich die Soll-Drehzahl des Motors M aus der Differenz zwischen der Frequenz des Ständerstroms und der Schlupffrequenz des Motors M ergibt.

Falls der Mikrocomputer MC nun feststellt, dass die Soll-Drehzahl mit dieser Aenderung der Frequenz des Ständerstroms im wesentlichen erreicht wird, veranlasst er, dass nichts weiteres unternommen wird, denn das gewünschte Resultat ist ja erreicht. Anderenfalls bewirkt der Mikrocomputer MC, dass wie folgt weitergefahren wird.

In Antwort auf die Aenderung der Frequenz des Ständerstroms ändert sich dessen Effektivwert. Dieser wird nun als Spannungsabfall am Messwiderstand M gemessen und dem Steuerungsteil ST zugeführt (Klemmen x,x'). Im Schaltungsteil 5, der beispielsweise einen A/D-Wandler und einen Verstärker umfasst, wird dieser Spannungsabfall erfasst und zu einem Wert verarbeitet, der dem Mikrocomputer MC zugeführt wird. Der Mikrocomputer MC vergleicht diesen zugeführten Wert mit der Stromführungsgrösse, und das Resultat des Vergleichs wird ausgewertet, wie bereits im vorangehenden beschrieben wurde.

Als Folge davon erhöht sich die Frequenz des Ständerstroms schrittweise über die Zeit. Zu einem gewissen Zeitpunkt wird die Soll-Drehzahl mit der zuletzt erfolgten Aenderung der Frequenz des Ständerstroms im wesentlichen erreicht, und dann veranlasst der Mikrocomputer MC, dass die Frequenz nicht weiter geändert wird, d.h. das gewünschte Resultat ist erreicht und der Steuerungsteil ST hält nun die Drehzahl des Motors M auf dem erreichten Wert konstant. Der Verlauf der Frequenz des Ständerstroms über die Zeit wird weiter unten im Zusammenhang mit Fig. 3 beschrieben.

Im übrigen bewerkstelligt eine mit dem Mikrocomputer MC verbundene Ueberwachungsvorrichtung 6 für die Stromversorgung des Steuerungsteils ST die bereits beschriebene Umschaltung dieser Stromversorgung zwischen der Speiseleitung zum Wechselspannungsnetz R,S,T (Klemmen a,b) und der Hilfspeiseleitung zum Isolationstransformator IT (klemmen a',b'). Diese Massnahme sichert, dass der Steuerungsteil ST bei Spannungsausfall am Wechselspannungsnetz weiterhin mit elektrischer Energie versorgt wird, was insbesondere ermöglicht, den Motor M bei Spannungsausfall am Wechselspannungsnetz wie bereits beschrieben optimal abzubremsen und somit einen Beitrag zur Sicherheit beim Gebrauch der angetriebenen Maschine leistet.

Zur Eingabe der vom Mikrocomputer MC benötigten Daten wie z.B. der Betriebsspannung/Betriebsfrequenz-Kennwert des Motors M ist eine allgemein mit 7 bezeichnete Eingabevorrichtung vorgesehen. Auch ist zur Anzeige und/oder Ausgabe der vom Mikrocomputer MC bereitgestellten Daten wie unter anderem und beispielsweise die Signalisierung von Feldschwächung im Motor M, Beschleunigung, Bremsung, Erreichung der Soll-Drehzahl usw., eine allgemein mit 8 bezeichnete Ausgabe- und/ oder Anzeigevorrichtung vorgesehen.

In Fig. 3 wird graphisch dargestellt, wie der Verlauf der Frequenz f des Ständerstroms über die Zeit t gesteuert wird. Es ist auch ein vergrösserter Ausschnitt des zu beschreibenden Verlaufes dargestellt.

Eine Aenderung der Frequenz des Ständerstroms um den sich ergebenden Frequenzanstieg (Kennlinie FA im vergrösserten Ausschnitt) erhöht den Effektivwert des Ständerstroms so, dass zufolge des Lastmoments die Stromführungsgrösse zumindest für kurze Zeit geringfügig überschritten und daher die Frequenz konstantgehalten wird (Kennlinie FK im vergrösserten Ausschnitt). Da der Motor seine Drehzahl entsprechend ändert, sinkt der Effektivwert des Ständerstroms mit dem Konstanthalten der Frequenz und zufolge der Umwandlung der zugeführten elektrischen Energie in Rotationsenergie wieder unter die Stromführungsgrösse, so dass die nächste Aenderung der Frequenz des Ständerstroms einsetzt (Kennlinie wie FA im vergrösserten Ausschnitt). Es ergibt sich ein stufiger Verlauf der Frequenz des Ständerstroms (Kennlinien FA,FK). Wenn aber die Frequenzänderungsrate klein genug gewählt wird, sind die Stufen so klein, dass sie praktisch nicht wahrnehmbar sind, und die resultierende Variation der Drehzahl des Motors M über die Zeit verläuft im wesentlichen (d.h. makroskopisch betrachtet) stetig, wie es in Fig. 3 mit der die effektive Drehzahl darstellenden Kennlinie FF gezeigt wird (diese Kennlinie FF ist im vergrösserten Ausschnitt wiederholt und dort mit ihrer echten Girlandenform dargestellt). In einer optimalen Zeit T erreicht die Frequenz f des Ständerstroms ihren Sollwert fₛ, und die Drehzahl des Motors M ergibt sich daraus unter Berücksichtigung des Schlupfes.

Im vergrösserten Ausschnitt der Fig. 3 sind die Zeitachse t und die Frequenzachse f wiederholt, die Schenkel des dargestellten Winkels α sind parallel zur Zeitachse t und zur Kennlinie FA des Frequenzanstiegs und die Frequenzänderungsrate ist somit gleich tg(α).

In Fig. 3 ist auch die die effektive Drehzahl darstellende Kennlinie FB für eine Bremsung des Motors M dargestellt: sie ist im wesentlichen symmetrisch zur Kennlinie FF. Beide Kennlinien FF und FB verlaufen makroskopisch betrachtet im wesentlichen stetig und parabolisch, bis der entsprechende Sollwert fₛ bzw. null erreicht ist, und beide verlaufen mikroskopisch betrachtet im wesentlichen als Feston, d.h. girlandenförmig: wegen der weitgehenden Analogie der Kennlinien FB und FF wird in Fig. 3 auf eine separate Darstellung eines vergrösserten Ausschnitts der Kennlinie FB verzichtet.

Der Mikrocomputer MC kann die Zeitdauer des Frequenzanstiegs (Kennlinie FA) messen, die sich bei einer vorbestimmten Frequenzänderungsrate ergibt: diese Zeitdauer entspricht der elektrischen Zeitkonstante des Motors unter dynamischen Bedingungen bei dem vorgegebenen, von der Stromführungsgrösse vorbestimmten Ständerstrom.

Der Mikrocomputer MC kann auch die gesamte Zeitdauer des Drehzahlanstiegs pro Frequenzstufe bei konstanter Frequenz (Kennlinien FA und FK) messen. Diese Zeitdauer ("Hochlaufzeit des Motors") wird vom Motor benötigt, um mit der Drehzahl nachzukommen und somit ein entsprechendes Absinken des Effektivwerts des Ständerstroms zu bewirken, das seinerseits wieder den nächsten Frequenzanstieg (Kennlinie FA) auslöst: diese Zeitdauer entspricht der durch das Trägheitsmoment bestimmten mechanischen Zeitkonstante des Motors.

Diese beiden gemessenen Zeitdauerwerte beschreiben einen wichtigen Betriebsparameter des Motors M und seiner mechanischen Last, d.h. des gesamten Antriebes: daraus kann ein Mass für die bereits erwähnte "Drehsteifigkeit des Antriebs" gewonnen worden. Es ist daher zum Zwecke dieser Messungen vorteilhaft, die Frequenzänderungsrate so gross zu wählen, dass als Folge des dadurch stark angestiegenen Effektivwertes des Ständerstroms die Frequenz auch makroskopisch gesehen zeitweise konstant bleibt, so dass die Kennlinie der resultierenden Variation dei Drehzahl über die Zeit im wesentlichen als Feston, d.h. girlandenförmig verläuft. Die Kennlinie FF der Fig. 3 verläuft dann auch ohne Vergrösserung sichtbar als Feston, d.h. girlandenförmig, wie es im Auschnitt der Fig. 3 dargestellt ist.

Wenn die Frequenzänderungsrate im Verhältnis zur Hochlaufzeit des Motors hoch ist, ergeben sich längere Kennlinien FA und FK und eine entsprechend kleinere Anzahl von grösseren Elemente der girlandenförmigen Kennlinie FF. Der Motor wird dann nicht optimal betrieben. Umgekehrt ist der Antrieb um so reaktionsfähiger (um so "dynamischer"), als die Kennlinien FA und FK kürzer und die Elemente der girlandenförmigen Kennlinie FF zahlreicher und kleiner sind. Zu Messzwecken empfiehlt sich daher, den Frequenzanstieg (Kennlinie FA) so zu bewirken, dass der Effektivwert des Ständerstroms stets in Nähe der Stromführungsgrösse liegt, diese also nur soviel überschreitet, als es zur Gewährleistung der Messung nötig ist, so dass die Frequenz auch nur kurze Zeit konstant gehalten wird (Kennlinie FK). Der Mikrocomputer MC kann entsprechend programmiert werden.

Es sei hier noch erwähnt, dass wichtige zusätzliche Funktionen des Mikrocomputers MC darin bestehen, die im vorstehenden bereits angegebenen besonderen Verfahren zu steuern, nämlich: das optimierte Halteverfahren am Ende einer Abbremsung, die Umschaltung zwischen Sternschaltung und Dreieckschaltung unter Konstanthaltung der magnetischen Verhältnisse des Ständers, und die automatische Anpassung an verschiedene Motoren eines Systems von aufeinander abgestimmten Motoren wiederum unter Konstanthaltung der magnetischen Verhältnisse des Ständers.

In der vorangehenden Beschreibung der Erfindung werden verschiedene Funktionen im Steuerungsteil ST von einem Mikrocomputer MC wahrgenommen und ausgeübt. Dies ist als Beispiel zu verstehen: solche Funktionen können auch von auf bekannte Weise dazu ausgebildeten Schaltungen und Baugruppen ("Hardware") wahrgenommen und ausgeübt werden.

## Patentansprüche

1. Verfahren zur Aenderung der Ist-Drehzahl eines Mehrphasen-Asynchronmotors bis zur Erreichung einer Soll-Drehzahl, wobei der mehrphasige Ständerstrom des Motors eine variable Frequenz aufweist und sein Effektivwert in Abhängigkeit von einer Stromführungsgrösse bestimmt wird, dadurch gekennzeichnet, dass
(a) die Frequenz des Ständerstroms entsprechend dem Sinn der gewünschten Drehzahländerung mit einer vorbestimmten Frequenzänderungsrate geändert wird,
(b) der sich nun zufolge der Frequenzänderung ändernde Effektivwert des Ständerstroms gemessen und mit der Stromführungsgrösse verglichen wird,
(c) falls der gemessene Effektivwert des Ständerstroms grösser ist als die Stromführungsgrösse, die Frequenz zeitweise auf dem erreichten Wert gehalten wird,
(d) die erreichte Frequenz mit der Soll-Drehzahl verglichen wird,
(e) falls die erreichte Frequenz unter Berücksichtigung eines der Stromführungsgrösse entsprechenden Motorschlupfes der Soll-Drehzahl entspricht, die Frequenz definitiv auf dem erreichten Wert konstant gehalten wird, womit das Verfahren beendet ist,
(f) anderenfalls die Frequenz konstant gehalten wird, bis der nun zufolge der Drehzahländerung sinkende Effektivwert des Ständerstroms kleiner geworden ist als die Stromführungsgrösse, und dann die Folge von Verfahrensschritten ab Verfahrensschritt (a) wiederholt wird.

2. Verfahren nach Anspruch 1, dadurch gekennzeichnet, dass der mehrphasige Ständerstrom des Motors von einem Wechselrichter geliefert wird, der elektrische Energie von einem Wechselspannungsnetz bezieht und über einen Gleichrichter als Gleichstrom erhält, derart, dass der Motor von der bezogenen elektrischen Energie beschleunigt oder gebremst wird.

3. Verfahren nach Anspruch 2, dadurch gekennzeichnet, dass "Feldschwächung im Motor" signalisiert wird, wenn die Variation der Ständerspannung über die Frequenz von einem charakteristischen Betriebsspannung/Betriebsfreguenz-Kennwert des Motors abweicht.

4. Verfahren nach Anspruch 2, dadurch gekennzeichnet, dass der Wechselrichter bei Spannungsausfall am Wechselspannungsnetz elektrische Energie vom mehrphasigen Ständerstrom des Motors bezieht, in Gleichtrom wandelt und zu einem Lastwiderstand durchschaltet, um den Motor geführt zu bremsen.

5. Verfahren nach Anspruch 4, dadurch gekennzeichnet, dass der Wechselrichter bei.Spannungsausfall am Wechselspannungsnetz elektrische Energie vom mehrphasigen Ständerstrom des Motors bezieht, um sich selbst sowie ihn steuernde Schaltungen mit elektrischer Energie zu versorgen.

6. Verfahren nach Anspruch 4, dadurch gekennzeichnet, dass der Wechselrichter abgeschaltet wird, wenn die Spannung am Lastwiderstand einen vorgegebenen Höchstwert überschreitet, und bei gleichbleibender Frequenz wieder eingeschaltet wird, wenn die Spannung am Lastwiderstand einen vorgegebenen Tiefstwert unterschreitet.

7. Verfahren nach Anspruch 1, dadurch gekennzeichnet, dass die Frequenzänderungsrate so klein gewählt wird, dass die resultierende Variation der Drehzahl über die Zeit im wesentlichen stetig verläuft.

8. Verfahren nach Anspruch 1, dadurch gekennzeichnet, dass die Frequenzänderungsrate so gross gewählt wird, dass die Kennlinie der resultierenden Variation der Drehzahl über die Zeit im wesentlichen als Feston, d.h. girlandenförmig verläuft, und dass aus Kennwerten, welche die Form und Grösse eines Elements der girlandenförmigen Kennlinie bezeichnen, ein Mass für die Drehsteifigkeit des belasteten Motors gewonnen wird.

9. Verfahren nach Anspruch 2, dadurch gekennzeichnet, dass gleichzeitig der Betrieb des Wechselrichters wahlweise zwischen einer Speisung des Motors entsprechend dessen Betriebsspannung/Betriebsfrequenz-Kennwert für Sternschaltung und für Dreieckschaltung bzw. Viereckschaltung umgeschaltet und die Frequenz des Ständerstroms um einen Faktor √3 bzw. √2 im entsprechenden Sinn geändert wird, derart, dass bei um den Faktor √3 bzw. √2 höherer Drehzahl das Drehmoment des Motors im wesentlichen gleich bleibt.

10. Verfahren nach Anspruch 2, dadurch gekennzeichnet, dass gleichzeitig ein zum Betrieb des Wechselrichters verwendeter Betriebsspannung/Betriebsfrequenz-Kennwert des Motors und die Frequenz des Ständerstroms im entsprechenden Sinn um einen gleichen Faktor geändert werden, derart, dass das Drehmoment des Motors konstant bleibt.

11. Verfahren nach Anspruch 9 und 10, dadurch gekennzeichnet, dass
(k) in einem Motorensystem mehrere voneinander verschiedene und aufeinander abgestimmte Mehrphasen-Asynchronmotoren bereitgestellt werden, deren maximales Drehmoment das gleiche ist, während deren Betriebsspannung/Betriebsfrequenz-Kennwert eines der Glieder einer mit √3 bzw. √2 als Quotient gebildeten geometrischen Folge ist,
(l) einer der Motoren dieses Motorensystems an den Wechselrichter angeschlossen wird,
(m) die Abhängigkeit des Ständerstroms von dessen Frequenz und von der Ständerspannung bestimmt und daraus ermittelt wird, welchen Betriebsspannung/Betriebsfrequenz-Kennwert der an den Wechselrichter angeschlossene Motor aufweist,
(n) der der Steuerung eingegebene Betriebsspannung/Betriebsfrequenz-Kennwert in Abhängigkeit vom festgestellten Betriebsspannung/Betriebsfrequenz-Kennwert und von der Schaltung des Wechselrichters in Sternschaltung oder Dreieckschaltung bzw. Viereckschaltung bestimmt wird.

12. Verfahren nach Anspruch 11, dadurch gekennzeichnet, dass der Wert √3 bzw. √2 auch als Referenzwert für eine Anpassung der Frequenzänderungsrate, eines am Motor vorgenommenen Bremsvorgangs und/oder eines mit Hilfe des Motors vorgenommenen vektorgesteuerten Positioniervorgangs an einen den jeweils verwendeten Motor charakterisierenden Induktivitätswert verwendet wird.

13. Einrichtung zur Ausführung des Verfahrens nach Anspruch 1, gekennzeichnet durch
- Mittel zur Einstellung einer Soll-Drehzahl;
- Mittel zur Einstellung einer Stromführungsgrösse;
- Mittel zur Einstellung einer Frequenzänderungsrate;
- Mittel zur Konstanthaltung der Frequenz des Ständerstroms oder zu deren Aenderung mit der Frequenzänderungsrate in Abhängigkeit von einem entsprechenden Signal für die Freigabe der Aenderung;
- Mittel zur Messung eines Effektivwerts des Ständerstroms;
- Mittel zum Vergleich des Effektivwerts des Ständerstroms mit der Stromführungsgrösse und zur Abgabe eines entsprechenden Vergleichssignals; und
- Mittel zur Erzeugung des Freigabesignals in Abhängigkeit von den Vergleichssignalen.

14. Motorensystem als Mittel zur Ausführung des Verfahrens nach Anspruch 11, umfassend mehrere Dreiphasen- bzw. Vierphasen-Asynchronmotoren, die ein gleiches maximales Drehmonent aufweisen, während sie voneinander verschiedene Betriebsspannung/Betriebsfreguenz-Kennwerte aufweisen, von denen jedes eines der Glieder einer mit √3 bzw. √2 als Quotient gebildeten geometrischen Folge ist, so dass die Motoren dieses Motorensystems mit dem Quotienten √3 bzw. √2 als Bildungsgesetz aufeinander abgestimmt sind.

## Claims

1. A process for changing the effective speed of a polyphase asynchronous motor until reaching a set-point speed, the polyphase stator current of the motor having a variable frequency and its effective value being determined by a current control variable, characterized in that
(a) the frequency of the stator current is changed with a predetermined frequency change rate according to the direction of the desired speed change,
(b) the effective value of the stator current which due to the frequency change will now change is measured and compared with the current control variable,
(c) if the measured effective value of the stator current is greater than the current control variable the frequency is kept temporarily at the attained value,
(d) the attained frequency is compared with the setpoint speed,
(e) if the attained frequency corresponds to the setpoint speed when considering a slip of the motor corresponding to the current control variable, frequency is definitively kept constant at the attained value, which terminates the process,
(f) if this is not the case, the frequency is kept constant until the effective value of the stator current, which is now decreasing due to the change in speed, has become smaller than the current control variable and the sequence of process steps starting at process step (a) is then repeated.

2. A process according to claim 1 characterized in that the polyphase stator current of the motor is supplied by an inverter which draws electrical energy from an a.c. voltage mains and obtains d.c. via a rectifier, in such manner that the motor is accelerated or braked by the fed electrical energy.

3. A process according to claim 2 characterized in that "field weakening in the motor" is signaled if the variation of the stator voltage in respect of frequency deviates from a characteristic operating voltage/operating frequency value.

4. A process according to claim 2 characterized in that in cases of voltage failure at the a.c.voltage mains the inverter gets electrical energy from the polyphase stator current of the motor, converts it to d.c. and switches it through to a load resistor in order to brake the motor in a guided manner.

5. A process according to claim 4 characterized in that in cases of voltage failure at the a.c.voltage mains the inverter gets electrical energy from the polyphase stator current of the motor, in order to supply itself and other control circuits with electrical energy.

6. A process according to claim 4 characterized in that the inverter is turned off if the voltage at the load resistor exceeds a predetermined maximum value and with a frequency kept constant is turned on again if the voltage at the load resistor falls below a predetermined minimum value.

7. A process according to claim 1 characterized in that the frequency change rate is chosen as so small that the resulting variation of the speed in respect of time is essentially steady.

8. A process according to claim 1 characterized in that the frequency change rate is chosen as being so large that the characteristic curve of the resulting variation of the speed in respect of time follows essentially the shape of a festoon or garland, and that a measure for the torsional rigidity of the motor under load may be obtained from characteristic values designating the form and dimensions of an element of the garland-shaped characteristic curve.

9. A process according to claim 2 characterized in that simultaneously the operation of the inverter optionally is switched between a motor feed according to its characteristic operating voltage/operating frequency value for star connections and for delta or quadrangle connections and that the frequency of the stator current is changed by a factor of √3 or √2 in the relevant direction, in such manner that with a speed increased by √3 or √2 the torque of the motor will remain essentially the same.

10. A process according to claim 2 characterized in that simultaneously a characteristic operating voltage/operating frequency value of the motor used for the operation of the inverter and the frequency of the stator current are changed in the same direction by a common factor, in such manner that the torque of the motor will remain constant.

11. A process according to claim 9 and 10 characterized in that
(k) in a motor system several polyphase asynchronous motors are installed, which are different from but harmonized with each other in that their maximum torque is the same whereas their characteristic operating voltage/operating frequency value constitutes one of the elements of a geometric progression formed with √3 or √2 as quotient,
(l) one of the motors of the motor system is connected to the inverter,
(m) the dependence of the stator current on its frequency and on the stator voltage is determined and used to calculate the characteristic operating voltage/operating frequency value of the motor connected to the inverter,
(n) the characteristic operating voltage/operating frequency value input into the control is determined in respect of the ascertained characteristic operating voltage/operating frequency value and the connection of the inverter in star, delta or quadrangle connection.

12. A process according to claim 11 characterized in that the value √3 and √2 is also used as a reference value for adaption of the frequency change rate, of a braking process executed at the motor and/or of a vector-controlled positioning process done with the help of the motor, to an inductance value characterizing the motor used.

13. A device for performing the process according to claim 1 characterized by
- means for the adjustment of a setpoint speed;
- means for the adjustment of a current control variable;
- means for the adjustment of a frequency change rate;
- means for the keeping constant of the stator current frequency or for changing it at the frequency change rate dependent on a corresponding signal for the enabling of the change;
- means for measuring an effective value of the stator current;
- means for comparing the effective value of the stator current with the current control variable and for generating a corresponding comparison signal; and
- means for generating the enabling signal dependent on the comparison signals.

14. A motor system as a means for performing the process according to claim 11, comprising several three-phase or four-phase asynchronous motors having the same maximum torque while having different characteristic operating voltage/operating frequency values each of which is one of the elements of a geometric progression formed with √3 or √2 as quotient, so that the motors of the motor system are harmonized with each other by having the quotient √3 or √2 as a law of formation.

## Revendications

1. Procédé pour faire varier la vitesse effective d'un moteur polyphasé asynchrone jusqu'à ce que l'on atteigne une vitesse de consigne, le courant statorique polyphasé du moteur possédant une fréquence variable et sa valeur effective étant déterminée par une grandeur de réglage de courant, caractérisé en ce que
(a) on fait varier la fréquence du courant statorique avec un taux de variation de fréquence prédéterminé en fonction de la direction de changement de vitesse désiré,
(b) on mesure la valeur effective du courant statorique qui va maintenant varier du fait de la variation de fréquence et on la compare à la grandeur de réglage de courant,
(c) si la valeur effective mesurée du courant statorique est supérieure à la grandeur de réglage de courant, on maintient temporairement la fréquence à la valeur obtenue,
(d) on compare la fréquence obtenue à la vitesse de consigne,
(e) si la fréquence que l'on a obtenue correspond à la vitesse de consigne lorsqu'on prend en compte un glissement du moteur correspondant à la grandeur de réglage de courant, on maintient la fréquence définitivement constante à la valeur obtenue, ce qui met un terme au processus,
(f) si tel n'est pas le cas, on maintient la fréquence constante jusqu'à ce que la valeur effective du courant statorique, qui est maintenant en train de diminuer à cause de la variation de vitesse, soit devenue inférieure à la grandeur de réglage de courant, et on répète alors la séquence des étapes opératoires, en commençant à l'étape opératoire (a).

2. Procédé selon la revendication 1, caractérisé en ce que le courant statorique polyphasé du moteur est alimenté par un onduleur qui tire de l'énergie électrique à partir d'un réseau de tension alternative et obtient du courant continu via un redresseur, de telle sorte que le moteur soit freiné ou accéléré par l'énergie électrique alimentée.

3. Procédé selon la revendication 2, caractérisé en ce qu'un "shuntage du champ du moteur" est signalé lorsque la variation de la tension statorique par rapport à la fréquence s'écarte d'une valeur caractéristique du rapport tension de fonctionnement/fréquence de fonctionnement.

4. Procédé selon la revendication 2, caractérisé en ce que, en cas de manque de tension dans le réseau de tension alternative, l'onduleur perçoit de l'énergie électrique à partir du courant statorique polyphasé du moteur, la convertit en courant continu et la transmet à une résistance de charge dans le but de freiner le moteur d'une manière guidée.

5. Procédé selon la revendication 4, caractérisé en ce que, en cas de perturbations de tension dans le réseau de tension alternative, l'onduleur perçoit de l'énergie électrique à partir du courant statorique polyphasé du moteur afin de s'alimenter lui-même et d'alimenter des circuits qui le commandent en énergie électrique.

6. Procédé selon la revendication 4, caractérisé en ce que l'onduleur est mis hors circuit si la tension à la résistance de charge dépasse une valeur'maximale prédéterminée et est remis à nouveau en circuit à la même fréquence lorsque la tension à la résistance de charge tombe en-dessous d'une valeur minimale prédéterminée.

7. Procédé selon la revendication 1, caractérisé en ce que le taux de variation de fréquence est choisi pour être à ce point petit que la variation résultante de la vitesse par rapport au temps est essentiellement continue.

8. Procédé selon la revendication 1, caractérisé en ce que le taux de variation de fréquence est choisi pour être à ce point grand que la courbe caractéristique de la variation résultante de la vitesse par rapport au temps suit essentiellement la forme d'un feston ou d'une guirlande, et qu'une mesure quant à la rigidité de rotation du moteur sous charge est obtenue à partir de valeurs caractéristiques désignant la forme et les dimensions d'un élément de la courbe caractéristique en forme de guirlande.

9. Procédé selon la revendication 2, caractérisé en ce que, de manière simultanée, on commute le fonctionnement de l'onduleur au choix entre une alimentation de moteur en fonction de la valeur caractéristique du rapport tension de fonctionnement/fréquence de fonctionnement relatif au couplage en étoile et en triangle ou en quadrilatère, et on fait varier la fréquence du courant statorique d'un facteur de √3 ou de √2 dans la direction pertinente, de telle sorte que, avec une augmentation de vitesse d'un facteur de √3 ou de √2, le couple du moteur reste essentiellement le même.

10. Procédé selon la revendication 2, caractérisé en ce que, de manière simultanée, on fait varier dans la même direction et d'un même facteur une valeur caractéristique du rapport tension de fonctionnement/fréquence de fonctionnement utilisé pour le fonctionnement de l'onduleur et la fréquence du courant statorique, de telle sorte que le couple du moteur reste constant.

11. Procédé selon les revendications 9 et 10, caractérisé en ce que
(k) dans un système de moteurs, on prévoit plusieurs moteurs polyphasés asynchrones qui sont différents l'un de l'autre mais harmonisés l'un par rapport à l'autre en ce que leur couple maximal est le même, tandis que leur valeur caractéristique du rapport tension de fonctionnement/fréquence de fonctionnement constitue un des éléments d'une progression géométrique ayant √3 ou √2 comme quotient,
(l) un des moteurs du système de moteurs est raccordé à l'onduleur,
(m) la dépendance entre le courant statorique et sa fréquence ainsi que sa tension statorique est déterminée et utilisée pour calculer quelle est la valeur caractéristique du rapport tension de fonctionnement/fréquence de fonctionnement du moteur raccordé à l'onduleur,
(n) la valeur caractéristique du rapport tension de fonctionnement/fréquence de fonctionnement entrée dans la commande est déterminée en fonction de par rapport à la valeur caractéristique constatée du rapport tension de fonctionnement/fréquence de fonctionnement et du couplage de l'onduleur en étoile, en triangle ou en quadrilatère.

12. Procédé selon la revendication 11, caractérisé en ce que les valeurs √3 et √2 sont également utilisées comme valeurs de référence pour adapter le taux de variation de fréquence d'un processus de freinage réalisé au moteur et/ou d'un processus de positionnement à commande vectorielle réalisé à l'aide du moteur, à une valeur d'inductance caractérisant le moteur utilisé.

13. Dispositif pour la mise en oeuvre du procédé selon la revendication 1, caractérisé par
- des moyens pour le réglage d'une vitesse de consigne;
- des moyens pour le réglage d'une grandeur de réglage de courant;
- des moyens pour le réglage d'un taux de variation de fréquence;
- des moyens pour maintenir constante la fréquence de courant statorique ou pour la faire varier au taux de variation de fréquence en fonction d'un signal correspondant pour la validation de la variation;
- des moyens pour mesurer une valeur effective du courant statorique;
- des moyens pour comparer la valeur effective du courant statorique à la grandeur de réglage de courant et pour générer un signal de comparaison correspondant; et
- des moyens pour générer le signal de validation en fonction des signaux de comparaison.

14. Système de moteurs comme moyen pour mettre en oeuvre le procédé selon la revendication 11, comprenant plusieurs moteurs triphasés ou quadriphasés asynchrones possédant le même couple maximal, tout en ayant des valeurs caractéristiques du rapport tension de fonctionnement/fréquence de fonctionnement différentes, dont chacune d'elles est un des éléments d'une progression géométrique obtenue avec √3 ou √2 comme quotient, de telle sorte que les moteurs du système de moteurs soit harmonisés l'un par rapport à l'autre, le quotient √3 ou √2 faisant office de loi de formation.
